# EUROPEAN PATENT APPLICATION

(11) **EP 3 048 374 A1**
(43) Date of publication of application: **27.07.2016**
(21) Application number: 15152051.7
(22) Date of filing: 22.01.2015
(51) Int. Cl.: F24D 3/10

(54) **RETROFITABLE FLOW-THROUGH CONNECTOR ASSEMBLY AND EXPANSION TANK APPARATUS**

(71) Applicant: Global Water Solutions Ltd., St Helier JE1 2TR (GB)
(72) Inventor: The designation of the inventor has not yet been filed
(74) Representative: Vinsome, Rex Martin

(57) **Abstract**

A retrofittable flow-through connector assembly includes a connector (3) and a flow-through member (4). The connector (3) has a conduit portion (31). The flow-through member (4) includes a post (41) that extends into and through the conduit portion (31), and is formed with at least one first engaging element (42). The conduit portion (31) has a butt end segment (313) and a threaded segment (314) that extends from the butt end segment (313) . The butt end segment (313) is formed with at least one second engaging element (3131). The first and second engaging elements (42, 3131) releasably engage each other and restrict each other in a selected direction such that the flow-through member (4) is prevented from angular movement relative to the connector (3).

## Description

This invention relates to a flow-through connector assembly and an expansion tank apparatus including the same, more particularly to a flow-through connector assembly including a three-way pipe connector and a retrofittable flow-through member that engages releasably the three-way pipe connector.

EP 1008812 discloses a flow-through member for an expansion tank. The flow-through member includes a tubular flow-guidance element, an inner sleeve sleeved on the flow-guidance element, a spacer surrounding the inner sleeve, and a cylindrical sleeve sleeved on the spacer. The cylindrical sleeve is fitted into a nipple of the expansion tank, and is provided with a flange edge that extends into the expansion tank and that abuts against an inner wall of the expansion tank. A T-piece has a connection socket that has an inner thread engaging threadedly an outer thread of the nipple. The flow-guidance element extends into the T-piece. The flow-through member has the following drawbacks. Since the flange edge is disposed in the expansion tank and abuts against the inner wall of the expansion tank, the flow-through member must be installed inside the expansion tank before the membrane is installed in the expansion tank, is not retrofittable, and is not suitable for use in a standard expansion tank. In addition, the available sectional area of the nipple for passage of water therethrough is considerably reduced due to the extension of the inner sleeve, the spacer and the cylindrical sleeve into the nipple.

EP 0779477 discloses an expansion vessel that includes a top part, a connecting nipple and a through-flow means having a bush and an inner part. The inner part is installed in the expansion tank. The bush is inserted through the connecting nipple to connect immovably with the inner part. The through-flow means defines two through-flow conduits in the expansion tank. A connecting piece is fitted on the connecting nipple, and has two connector conduits corresponding to the through-flow conduits. The through-flow means has the similar drawbacks mentioned above. In addition, the through-flow means is relatively complicated.

EP 1018623 discloses a flow distributor for an expansion tank that is connected to a pipe system via a connecting conduit which has a connecting opening. The flow distributor includes a pipe section, a flow conduit adjoining the pipe section and disposed in the connecting opening, and a positioning device disposed in the connecting opening and connected to the flow conduit for positioning the flow distributor in the connecting opening. The positioning device includes a spacer ring mounted to a periphery of a first opening of the pipe section, a directional element that is fitted in the connecting opening at a certain distance from the first opening of the pipe section to ensure a predetermined alignment of the flow distributor in the connecting opening. The spacer ring is formed with a plurality of one-way hooks that grasp an inner end of the pipe section.

The aforesaid conventional flow distributor has the drawback that the positioning device is complicated and that the flow distributor is not retrofittable due to the engagement between the one-way hooks and the pipe section.

Therefore, an object of the present invention is to provide a retrofittable flow-through connector assembly that may overcome at least one of the aforesaid drawbacks associated with the prior art.

According to one aspect of this invention, there is provided a retrofittable flow-through connector assembly for an expansion tank.

The retrofittable flow-through connector assembly includes a three-way pipe connector and a flow-through member. The three-way pipe connector has first, second and third conduit portions. The first and second conduit portions extend respectively along first and second axial directions which are different from each other. The second conduit portion has an inlet opening. The flow-through member includes a post that extends into and through the first conduit portion and that has a bottom end aligned with the inlet opening in the second axial direction. The flow-through member is formed with at least one first engaging element. The first conduit portion has top and bottom axial ends, a butt end segment that extends from the bottom axial end in the first axial direction toward the top axial end, and a threaded segment that extends from the butt end segment to the top axial end in the first axial direction. The butt end segment is formed with at least one second engaging element. The first and second engaging elements releasably engage each other and restrict each other in a selected direction such that the flow-through member is prevented from angular movement relative to the three-way pipe connector and that the first engaging element is pluggable into and out of the second engaging element in the first axial direction.

According to another aspect of this invention, there is provided an expansion tank apparatus.

The expansion tank apparatus includes an expansion tank, a connector and a flow-through member. The connector has a conduit portion that has a butt end segment and a threaded segment extending from the butt end segment. The expansion tank has a threaded retainer that protrudes outwardly therefrom to engage threadedly the threaded segment. The flow-through member extends into and through the threaded retainer, and is formed with at least one first engaging member. The butt end segment is formed with at least one second engaging member. The first and second engaging elements releasably engage each other and restrict each other in a selected direction such that the flow-through member is prevented from angular movement relative to the connector.

In drawings which illustrate embodiments of the invention,
Fig. 1 is a sectional view of the first embodiment of a retrofittable flow-through connector assembly for an expansion tank apparatus according to the present invention;
Fig.2 is a fragmentary exploded perspective view of the first embodiment;
Fig. 3 is a partly sectional viewof the first embodiment, illustrating a middle state where protrusions of a flow-through member is to be pressed through a top open end of a conduit portion into a circumferentially extending groove in the conduit portion of a connector;
Fig. 4 is another partly sectional view of the first embodiment, illustrating the middle state from another side;
Fig. 5 is a fragmentary sectional view of the first embodiment assembled with the expansion tank;
Fig. 6 is a fragmentary exploded perspective view of the second embodiment of the retrofittable flow-through connector assembly according to the present invention;
Fig. 7 is a partly sectional view of the second embodiment; and
Fig. 8 is a sectional view of the second embodiment assembled with the expansion tank.

The following detailed descriptions are provided to illustrate the embodiments of the invention.

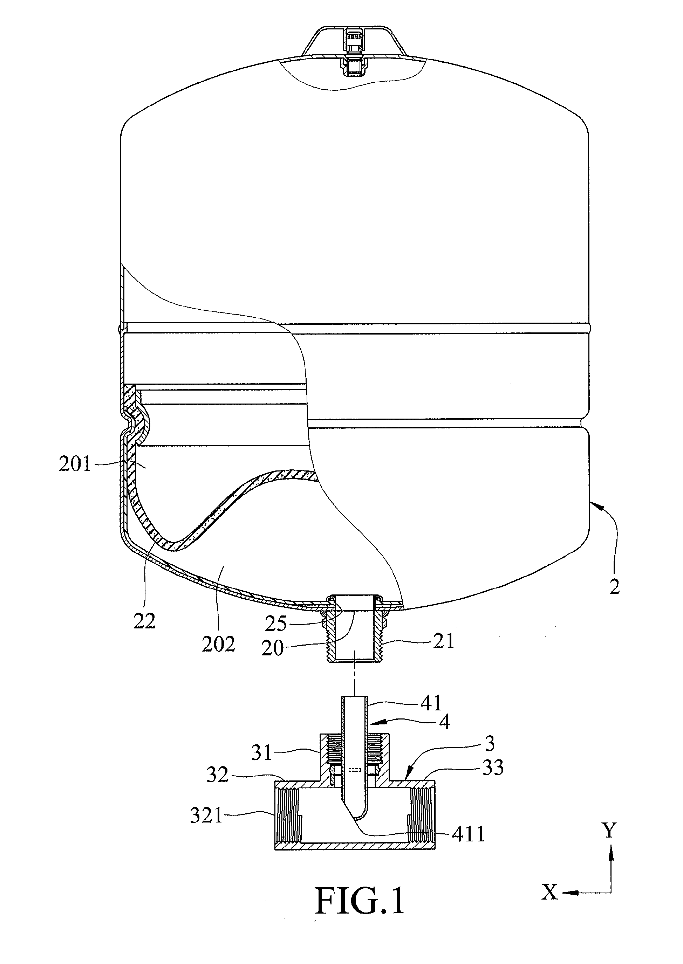

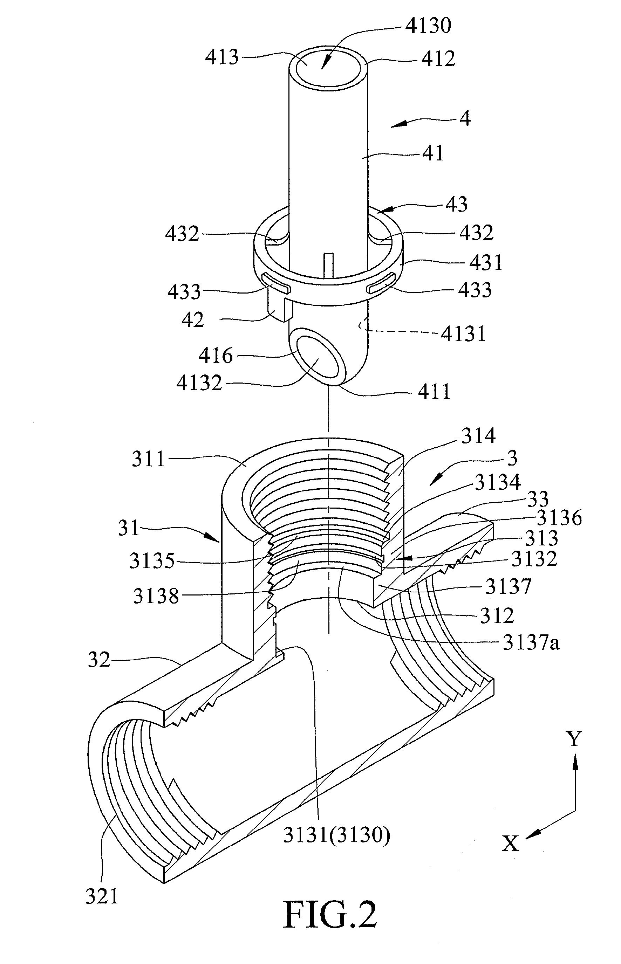

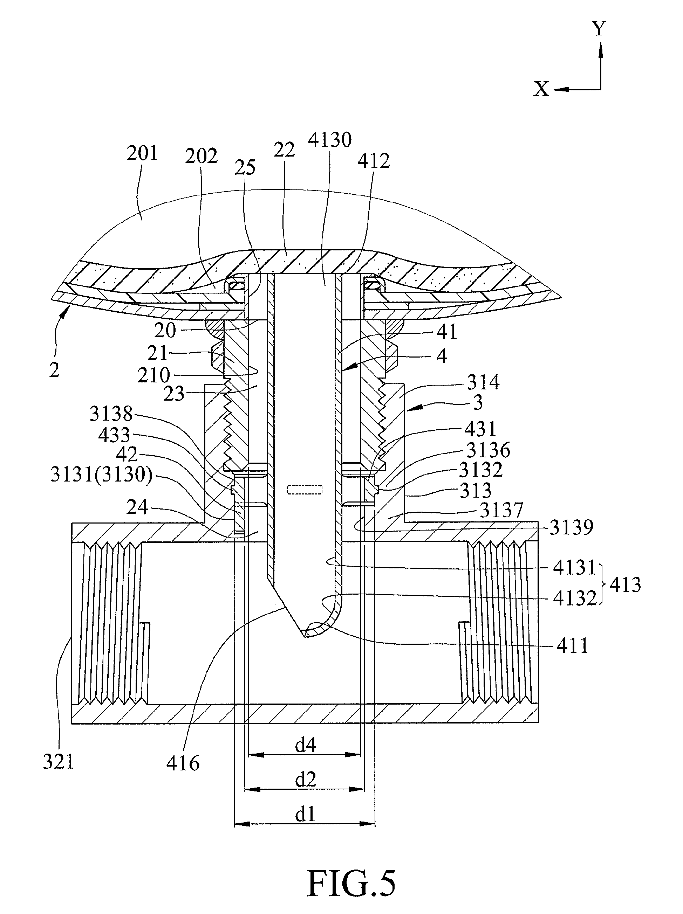

Figs. 1 to 5 illustrate the first embodiment of a retrofittable flow-through connector assembly for an expansion tank apparatus according to the present invention.

The retrofittable flow-through connector assembly includes a three-way pipe connector (3) and a flow-through member (4). The three-way pipe connector (3) has first, second and third conduit portions (31, 32, 33). The first and second conduit portions (31, 32) extends respectively along first and second axial directions (Y, X) which are different from each other. In this embodiment, the three-way pipe connector (3) has a T-shaped configuration. The second conduit portion (32) has an inlet opening (321) . The flow-through member (4) includes a post (41) that extends into and through the first conduit portion (31) and that has a bottom end (411) aligned with the inlet opening (321) in the second axial direction (X).

The flow-through member (4) is formed with at least one first engaging element (42). The first conduit portion (31) has top and bottom axial ends (311, 312), a butt end segment (313) that extends from the bottom axial end (312) in the first axial direction (Y) toward the top axial end (311), and a threaded segment (314) that extends from the butt end segment (313) to the top axial end (311) in the first axial direction (Y).

The butt end segment (313) is formed with at least one second engaging element (3131). The first and second engaging elements (42, 3131) releasably engage each other and restrict each other in a selected direction such that the flow-through member (4) is prevented from angular movement or rotation relative to the three-way pipe connector (3) and that the first engaging element (42) is pluggable into and out of the second engaging element (3131) in the first axial direction (Y).

In this embodiment, the first and second engaging elements (42, 3131) releasably engage each other in a tongue-and-groove engaging manner.

The butt end segment (313) is formed with an engaging groove (3130) that is defined by a recess-defining wall which defines the second engaging element (3131), and a circumferentiallyextendinggroove (3132) that is disposed above the engaging groove (3130). The flow-through member (4) further includes a connecting element (43) that is connected to the post (41) . The first engaging member (42) is in the form of a rectangular tab body that protrudes from the connecting element (43) into the engaging groove (3130). Preferably, the first engaging member (42) is press-fit into the engaging groove (3130).

In this embodiment, the connecting element (43) has a ring portion (431) surrounding the post (41), a plurality of rib portions (432) interconnecting the ring portion (431) and the post (41), and a plurality of protrusions (433) protruding in a radial direction relative to the first axial direction (Y) from the ring portion (431) into the circumferentially extending groove (3132) . The first engaging member (42) protrudes from the ring portion (431) in the first axial direction (Y).

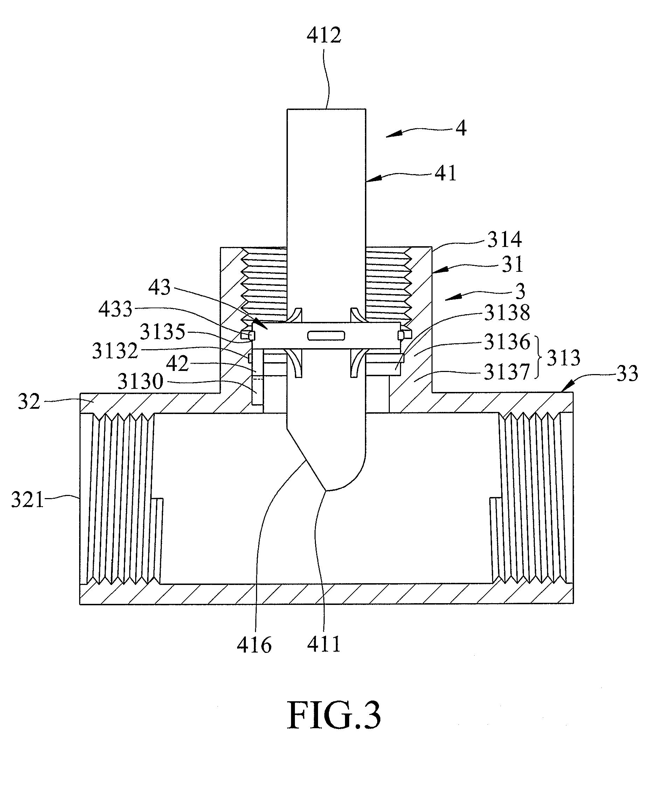

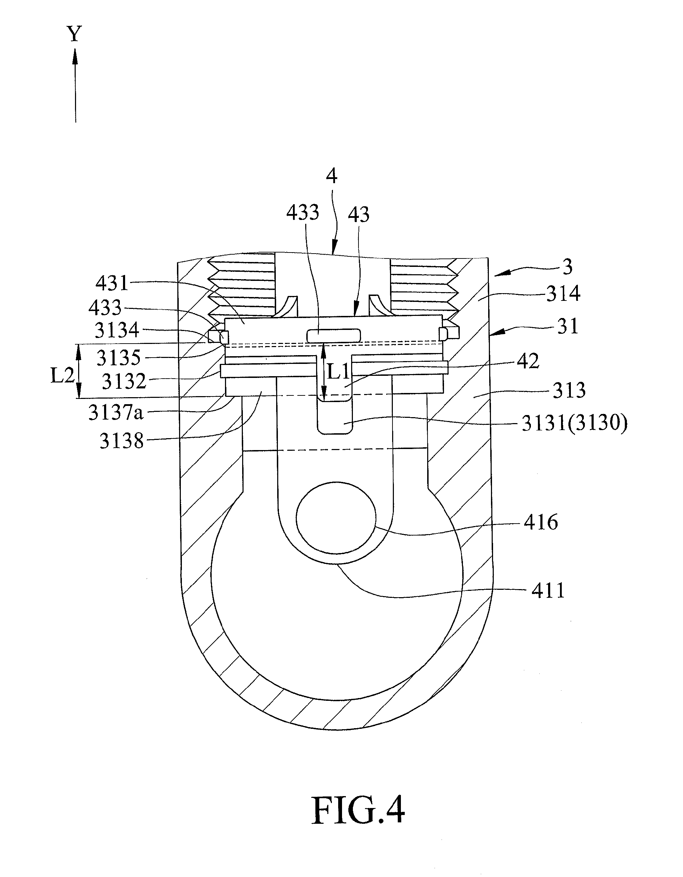

The butt end segment (313) has a chamfered top end (3134) that has a chamfer face (3135) for guiding sliding movement of the protrusions (433) toward the circumferentially extending groove (3132) when the flow-through member (4) is inserted into the first conduit portion (31) as illustrated in Figs. 3 and 4.

The butt end segment (313) has upper and lower sections (3136, 3137). The upper section (3136) has an inner diameter (d1) greater than an inner diameter (d2) of the lower section (3137). The lower section (3137) has a top end (3137a), and is formed with the engaging groove (3130) that extends through the top end (3137a) of the lower section (3137). The upper section (3136) is formed with the circumferentially extending grove (3132), and cooperates with the top end (3137a) of the lower section (3137) to define an annular open recess (3138) therebetween. The ring portion (431) is received in the annular open recess (3138). Preferably, the ring portion (431) has an inner diameter substantially equal to the inner diameter (d2) of the lower section (3137).

Each of the protrusions (433) is axially distanced from a bottom end of the tab body of the first engaging member (42) in the first axial direction (Y) by a first distanced (L1). The chamfered top end (3134) of the butt end segment (313) is axially distanced from the top end (3137a) of the lower section (3137) in the first axial direction (Y) by a second distance (L2) . The first distance (L1) is greater than the second distance (L2), so that the tab body of the first engaging member (42) maybe aligned with engaging groove (3130) and has a small portion received in a top end of the engaging groove (3130) before the protrusions (433) is brought into sliding contact with the chamfer face (3135), which prevents the protrusions (433) from pushing through the chamfered top end (3134) of the butt end segment (313) and being jammed thereat when the tab body is not yet aligned with the engaging groove (3130).

In this embodiment, the post (41) is hollow and further has a top end (412), a bottom opening (416), and an inner surface (413) that defines a fluid channel (4130) and that extends from the top end (412) of the post (41) to the bottom end (411) of the post (41) . The inner surface (413) has an axially extending section (4131) that extends in the first axial direction (Y), and an inclined section (4132) that extends inclinedly relative to the first axial direction (Y) from the axially extending section (4131) to the bottom end (411) of the post (41) and that is aligned with the inlet opening (321) in the second axial direction (X). The inner surface (413) serves as a fluid-guiding surface for guiding a liquid (not shown) to f low therealong.

The flow-through member (4) is a single piece, and has a hardness less than that of the three-way pipe connector (3), so that the protrusions (433) can be easily pressed through the chamfered top end (3134) of the butt end segment (313) and into the circumferentially extending groove (3130).

In this embodiment, the expansion tank (2) has a gas chamber (201), a diaphragm (22), a water chamber (202) separated from the gas chamber (201) by the diaphragm (22), and a threaded retainer (or nipple) (21) that protrudes outwardly from a periphery of a bottom hole (20) of the expansion tank (2) to engage threadedly the threaded segment (314). The flow-through member (4) extends into and through the threaded retainer (21) . The top and bottom ends (412, 411) of the post (41) of the flow-through member (4) are respectively disposed in the water chamber (202) and the three-way pipe connector (3). The disposing of the top end (412) of the post (41) in the water chamber adjacent to the bottom hole (20) has an advantage that the diaphragm (22) can be moved to abut against and supported on the top end (412) of the post (41) when a pushing force is created by a high pressure in the gas chamber to move the diaphragm (22), thereby preventing the diaphragm (22) from being pushed into or out of the threaded retainer (21) and being damaged by the threaded retainer (21) or an inner seal-retainer (25) connected to the threaded retainer (21).

The inner diameter (d2) of the lower section (3137) of the butt end segment (313), which is a minimum inner diameter of the butt end segment (313), is greater than an inner diameter (d4) of the threaded retainer (21). The threaded retainer (21) has an inner surface (212). The post (41) cooperates with the inner surface (210) of the threaded retainer (21) to define an upper fluid passage (23) therebetween for passage of the liquid therethrough. The lower section (3137) of the butt end segment (313) has an inner surface (3139) that cooperates with the post (41) to define a lower fluid passage (24) therebetween for passage of the liquid therethrough. The lower fluid passage (24) has a cross-sectional area substantially equal to or greater than a cross-sectional area of the upper fluid passage (23).

In operation, the liquid supplied from a liquid source (not shown) flows through the inlet opening (321) and the bottom opening (416) of the post (41) and into the channel (4130) in the post (41), then through the channel into the water chamber (202), and then from the water chamber (202) through the upper and lower fluid passages (23, 24) into the third conduit portion (33), and is discharged from an outlet of the third conduit portion (33), thereby permitting circulation of the liquid inside the water chamber (202) and preventing stagnation of the liquid inside the water chamber (202).

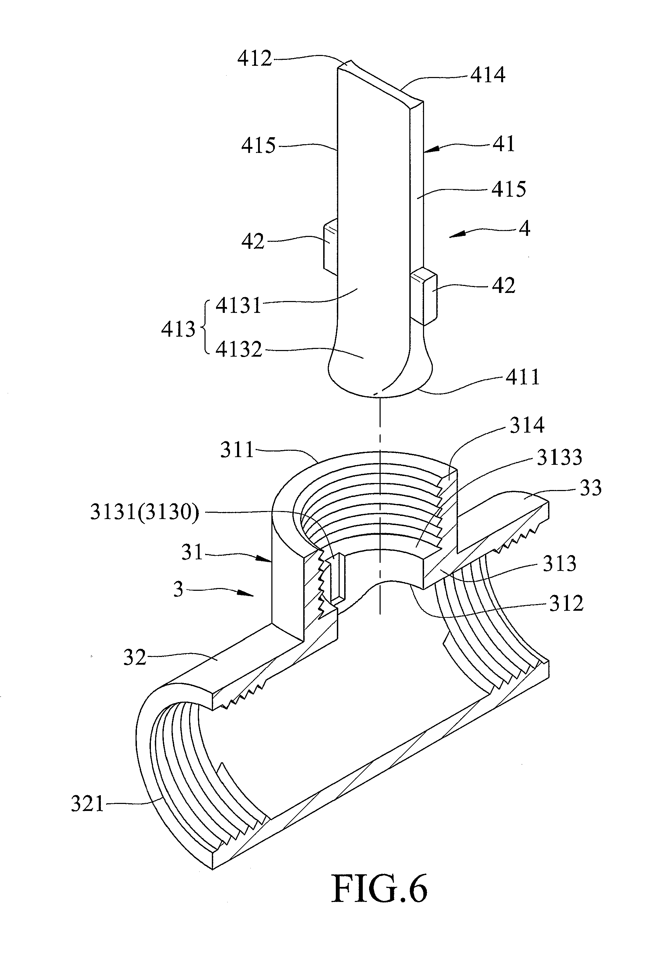

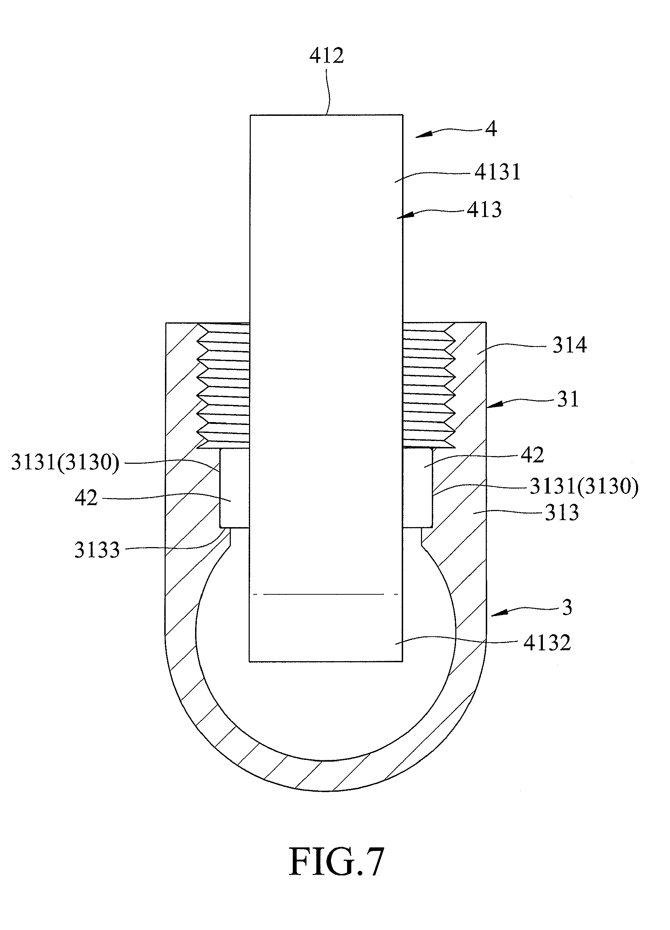

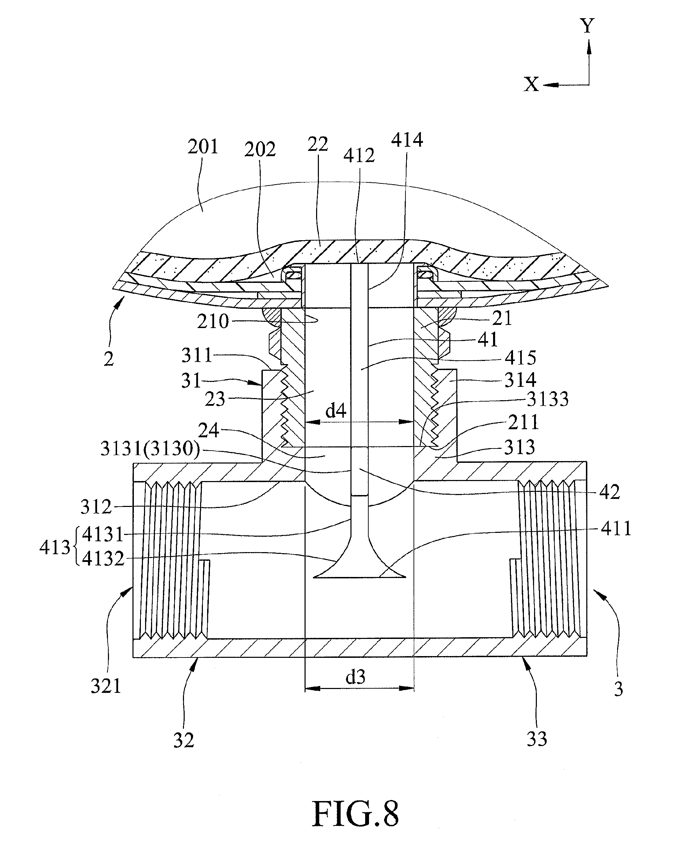

Figs. 6 to 8 illustrate the second embodiment of the retrofittable flow-through connector assembly according to the present invention. The second embodiment differs from the previous embodiment in the structure of the flow-through member (4) and the structure of the butt end segment (313) of the three-way pipe connector (3).

In this embodiment, the post (41) has top and bottom ends (412, 411), first and second fluid-guiding surfaces (413, 414) extending from the top end (412) of the post (41) to the bottom end (411) of the post (41) and opposite to each other in the second axial direction (X), and two opposite side faces (415) interconnecting the first and second fluid-guiding surfaces (413, 414) and opposite to each other in a transverse direction relative to the first and second axial directions (Y, X). The first fluid-guiding surface (413) has an axially extending section (4131) that extends in the first axial direction (Y), and an inclined section (4132) that extends inclinedly relative to the first axial direction (Y) from the axially extending section (4131) to the bottom end (411) of the post (41) and that is aligned with the inlet opening (321) in the second axial direction (X).

The butt end segment (313) has a uniform inner diameter, and is formed with two diametrically disposed engaging grooves (3130). The flow-through member (4) further includes two first engaging members (42) that are formed on and that protrude from the side faces (415) of the post (41) into the engaging grooves (3130), respectively. Preferably, the first engaging members (42) are press-fit into the engaging grooves (3130).

In this embodiment, the inner diameter (d2) of the butt end segment (313) is equal to the inner diameter (d4) of the threaded retainer (21).

By forming the second engaging member (3131) at the butt end segment (313) of the first conduit portion (31) of the three-way pipe connector (3) and by engaging the first and second engaging members (42, 3131) in such a manner to permit plugging of the first engaging member (42) in and out of the second engaging member (3131), the flow-through member (4) of the flow-through connector assembly of the present invention may have a simple structure and is retrofittable with respect to the three-way pipe connector (3). Since the three-way pipe connector (3) engages threadedly the threaded retainer (21), the flow-through connector assembly of the present invention is retrofittable. In addition, since the first engaging member (42) is entirely received in the second engaging member (3131) and since the size of the connecting element (43) is relatively small, reduction of the available sectional area of the lower fluid passage (24) for passage of the fluid therethrough due to the presence of the connecting element (43) in the lower fluid passage (24) is relatively small. Moreover, since the upper fluid passage (23) is free of any protrusions or connecting means disposed therein between the post (41) and the threaded retainer (21), there is no reduction of the available sectional area of the upper fluid passage (23). Hence, the aforesaid drawbacks associated with the prior art may be overcome.

## Claims

1. A retrofittable flow-through connector assembly for an expansion tank (2), the retrofittable flow-through connector assembly including a connector (3) and a flow-through member (4), the connector (3) having a firstconduit portion (31, 32, 33), the flow-through connector assembly being **characterized by**: the flow-through member (4) being formed with at least one first engaging element (42), the first conduit portion (31) having a butt end segment (313) and a threaded segment (314) that extends from the butt end segment (313), the butt end segment (313) being formed with at least one second engaging element (3131), the first and second engaging elements (42, 3131) releasably engaging each other and restricting each other in a selected direction such that the flow-through member (4) is prevented from angular movement relative to the three-way pipe connector (3).

2. The retrofittable flow-through connector assembly according to claim 1, **characterized in that** the connector is a three-way pipe connector (3) further having second and third conduit portions (31, 32, 33), the first and second conduit portions (31, 32) extending respectively along first and second axial directions (Y, X) which are different from each other, the second conduit portion (32) having an inlet opening (321), the flow-through member (4) including a post (41) that extends into and through the first conduit portion (31) and that has a bottom end (411) aligned with the inlet opening (321) in the second axial direction (X).

3. The retrofittable flow-through connector assembly according to claim 2, including one or more of the following features:
(i) **characterized in that** the first conduit portion (31) has top and bottom axial ends (311, 312), the butt end segment (313) extending from the bottom axial end (312) in the first axial direction (Y) toward the top axial end (311), and the threaded segment (314) extending from the butt end segment (313) to the top axial end (311) in the first axial direction (Y);
(ii) **characterized in that** the first engaging element (42) is pluggable into and out of the second engaging element (3131) in the first axial direction (Y); or
(iii) **characterized in that** the post (41) is hollow and further has a top end (412) and an inner surface (413) that defines a fluid channel (4130) and that extends from the top end (412) of the post (41) to the bottom end (411) of the post (41), the inner surface (413) having an axially extending section (4131) that extends in the first axial direction (Y), and an inclined section (4132) that extends inclinedly relative to the first axial direction (Y) from the axially extending section (4131) to the bottom end (411) of the post (41) and that is aligned with the inlet opening (321) in the second axial direction (X).

4. The retrofittable flow-through connector assembly according to claim 2 or 3, **characterized in that** the post (41) further has a top end (412) and first and second fluid-guiding surfaces (413, 414) extending from the top end (412) of the post (41) to the bottom end (411) of the post (41) and opposite to each other in the second axial direction (X), the first fluid-guiding surface (413) having an axially extending section (4131) that extends in the first axial direction (Y), and an inclined section (4132) that extends inclinedly relative to the first axial direction (Y) from the axially extending section (4131) to the bottom end (411) of the post (41) and that is aligned with the inlet opening (321) in the second axial direction (X).

5. The retrofittable flow-through connector assembly according to claim 4, further **characterized in that** the butt end segment (313) is formed with an engaging groove (3130) defined by a recess-defining wall which defines the second engaging element (3131), the post (41) further having two opposite side faces (415) interconnecting the first and second fluid-guiding surfaces (413, 414) and opposite to each other in a transverse direction relative to the first and second axial directions (Y, X), the first engaging member (42) being formed on and protruding from one of the side faces (415) into the engaging groove (3130).

6. The retrofittable flow-through connector assembly according to claim 5, further **characterized in that** the butt end segment (313) has an inner diameter (d3) less than an inner diameter (d4) of the threaded segment (314) and has a top end (3133), the engaging groove (3130) extending through the top end (3133) of the butt end segment (313).

7. The retrofittable flow-through connector assembly according to any one of the preceding claims, **characterized in that** the first and second engaging elements (42, 3131) releasably engage each other in a tongue-and-groove engaging manner.

8. The retrofittable flow-through connector assembly according to any one of the preceding claims, **characterized in that** the flow-through member (4) includes a post (41) and the butt end segment (313) is formed with an engaging groove (3130) that is defined by a recess-defining wall which defines the second engaging element (3131), the flow-through member (4) further including a connecting element (43) that is connected to the post (41), the first engaging member (42) being in the form of a tab body protruding from the connecting element (43) into the engaging groove (3130).

9. The retrofittable flow-through connector assembly according to claim 8, further **characterized in that** the butt end segment (313) is further formed with a circumferentially extending groove (3132) that is disposed above the engaging groove (3130), the connecting element (43) having a ring portion (431) surrounding the post (41), a plurality of rib portions (432) interconnecting the ring portion (431) and the post (41), and a plurality of protrusions (433) protruding from the ring portion (431) into the circumferentially extending groove (3132).

10. The retrofittable flow-through connector assembly according to claim 9, further **characterized in that** the butt end segment (313) has a chamfered top end (3134) that has a chamfer face (3135) for guiding sliding movement of the protrusions (433) toward the circumferentially extending groove (3132) when the flow-through member (4) is inserted into the first conduit portion (31).

11. The retrofittable flow-through connector assembly according to claim 9 or 10, further **characterized in that** the butt end segment (313) has upper and lower sections (3136, 3137), the upper section (3136) having an inner diameter (d1) greater than an inner diameter (d2) of the lower section (3137), the lower section (3137) having a top end (3137a) and being formed with the engaging groove (3130) that extends through the top end (3137a) of the lower section (3137), the upper section (3136) being formed with the circumferentially extending grove (3132) and cooperating with the top end (3137a) of the lower section (3137) to define an annular open recess (3138) therebetween, the ring portion (431) being received in the annular open recess (3138).

12. The retrofittable flow-through connector assembly according to claim 11, **characterized in that** each of the protrusions (433) is axially distanced from a bottom end of the tab body of the first engaging member (42) by a first distance (L1), the chamfered top end (3134) of the butt end segment (313) being axially distanced from the top end (3137a) of the lower section (3137) by a second distance (L2), the first distance (L1) being greater than the second distance (L2).

13. The retrofittable flow-through connector assembly according to any one of the preceding claims, **characterized in that** the flow-through member (4) is a single piece and has ahardness less than that of the three-way pipe connector (3).

14. An expansion tank apparatus including an expansion tank (2) and a connector assembly according to any one of the preceding claims, the expansion tank (2) having a threaded retainer (21) that protrudes outwardly therefrom to engage threadedly the threaded segment (314), the expansion tank apparatus being **characterized by** the flow-through member (4) extending into and through the threaded retainer (21).

15. The expansion tank apparatus according to claim 14, including one or more of the following features:
(i) **characterized in that** the first and second engaging elements (42, 3131) releasably engage each other in a tongue-and-groove engaging manner, such that the first engaging element (42) is pluggable into and out of the second engaging element (3131);
(ii) **characterized in that** the expansion tank (2) further has a gas chamber (201), a diaphragm (22), and a water chamber (202) separated from the gas chamber (201) by the diaphragm (22), the flow-through member (4) having two opposite ends (411, 412) that are respectively disposed in the water chamber (202) and the connector (3); or
(iii) **characterized in that** the butt end segment (313) has a minimum inner diameter (d2, d3) substantially equal to or greater than an inner diameter (d4) of the threaded retainer (21), the threaded retainer (21) having an inner surface (212), the post (41) cooperating with the inner surface (210) of the threaded retainer (21) to define an upper fluid passage (23) therebetween for passage of a liquid therethrough, the butt end segment (313) having an inner surface (3139) that cooperates with the post (41) to define a lower fluid passage (24) therebetween for passage of the liquid therethrough, the lower fluid passage (24) having a cross-sectional area substantially equal to or greater than a cross-sectional area of the upper fluid passage (23).
